# EUROPEAN PATENT APPLICATION

(11) **EP 2 395 584 A1**
(43) Date of publication of application: **14.12.2011**
(21) Application number: 10738203.8
(22) Date of filing: 15.01.2010
(51) Int. Cl.: H01M 4/86, H01M 8/18

(54) **ELECTRODE FOR A FLOW BATTERY**

(30) Priority: 06.02.2009 CN 200910077975
(71) Applicant: Golden Energy Fuel Cell Co., Ltd., Beijing 100176 (CN)
(72) Inventor: ZHENG, Zhongde, Beijing 100176 (CN); ZHANG, Chunrong, Beijing 100176 (CN); REN, Jinhua, Beijing 100176 (CN); WANG, Dongkui, Beijing 100176 (CN); MA, Hongbo, Beijing 100176 (CN); NING, Hongtao, Beijing 100176 (CN)
(74) Representative: Price, Nigel John King
(86) International application number: PCT/CN2010/070198
(87) International publication number: WO 2010/088847

(57) **Abstract**

Enclosed is an electrode for a flow battery, which comprises a graphite felt (1), wherein: said graphite felt includes multiple flow channels (2) for transmitting an electrolyte, said flow channels (2) are straight and distributed at equally spaced intervals, and the width and depth of said channels (2) and the interval between adjacent flow channels (2) are each half of the thickness of the graphite felt (1), which is a polyacrylonitrile graphite felt (1). Said flow battery electrolyte has a simple structure and is easily processed and assembled, the flow battery thickness and internal resistance are low, and transmission and dispersion of the electrolyte is highly effective. Flow batteries using said electrode enjoy high power density, high energy efficiency, long life, and can be made into high-power or even super-high-power flow batteries.

## Description

### Technical field

The invention pertains to flow battery field and relates to electrode for flow battery, especially the all vanadium redox flow battery electrode.

### Background art

Flow battery has a plurality of types. Flow battery represented by all vanadium redox flow battery shows electrochemical reaction on porous dispersal electrode via electrolyte of different valences to realize mutual conversion of chemical energy. Being an efficient and reversible fuel battery with the largest scale and most advanced technology and closest to industrialization, said battery is advantageously featured by high power, capacity, and efficiency, low cost, long life, environment-friendliness, and shows promising application prospect in fields like photovoltaic power generation, wind power, power distribution station, grid peak shaving, communication base station, UPS, municipal traffic, military battery, etc.. The battery is to bring a new energy technology revolution!

Flow battery generally applies graphite with flat surface and micropore as electrode. Under the action of circulation pump, electrolyte flows from the bottom up in longitudinal direction of the graphite felt and then disperses to the fibre surface of graphite felt via the micropores in graphite felt for electrode reaction. To realize constant and rapid electrode reaction, the reactant required for electrode reaction shall be continuously and rapidly supplied in a timely manner while the product from electrode reaction shall be transmitted away in the same manner. If the electrolyte has no main channel for rapid transmission but merely relies on the micropore dispersal of graphite felt, the dispersal speed of electrolyte will be very slow and serious dispersal polarization of electrode reaction will occur, therefore significantly weakening the power density, energy efficiency and service life of flow battery. This is specially the case for longitudinal graphite felt with large area that must be used in high-power flow battery.

To improve the transmission and dispersal speed of electrolyte for flow battery in graphite felt electrode, a diversion net and a turbulence net are generally provided between ion exchange membrane and graphite felt electrode. However, defects also exist, such as complex structure, difficult processing, inconvenient assembly, high thickness and internal resistance of flow battery, unsatisfactory dispersal speed of electrolyte, low power density of flow battery, low energy efficiency and short life, etc..

### Disclosure of invention

To overcome the said defects, the invention intends to provide an electrode for flow battery, which is advantageously featured by simple structure, easy processing and assembly, low thickness and internal resistance, effective transmission and dispersal of electrolyte, high power density of flow battery, high energy efficiency, long service life, etc, and can be made into high-power or even super-high-power flow batteries

The object of the invention is achieved through:

An electrode for flow battery comprising graphite felt, said graphite felt includes multiple flow channels (2) for transmitting an electrolyte.

Said graphite felt is a polyacrylonitrile graphite felt.

Said flow channels are straight.

Said flow channels are distributed at equally spaced intervals.

Said graphite felt has a thickness of 2-10mm, said flow channel has a width of 1-5mm and a depth of 1-5mm, and the interval between flow channels is 1-5 mm.

The width and depth of said channels and the interval between said channels are each half of the thickness of said graphite felt.

Study shows that when the thickness of graphite felt is less than 2mm, not only the active center for electrode reaction is less and electrochemical polarization of electrode is small, but also the cross-sectional area of flow channel is small, the flow transmission resistance of electrolyte in longitudinal direction of flow channel is high and the dispersal polarization of electrode is large, therefore resulting in low power density of flow battery and energy efficiency; when the thickness of graphite felt is over 10mm, the electrode resistance and ohmic polarization is large, resulting in low power density of flow battery and energy efficiency. A plurality of studies show that the preferred thickness of graphite felt is 6mm around.

Flow channel provides main channel for rapid transmission for electrolyte and increases the flow of electrolyte without increasing the power consumption of circulation pump. Under the action of circulation pump, the electrolyte flows from bottom up in longitudinal direction of flow channel. During the longitudinal flow process, the electrolyte is transmitted and dispersed passing through the micropores on graphite felt along horizontal direction and depth.

Study shows that when the width and depth of flow channel is less than half of the thickness, the flow transmission resistance of electrolyte in longitudinal direction is higher due to small cross-sectional area of flow channel; when the depth of flow channel is less than half of the thickness, the dispersal transmission resistance of electrolyte along depth is higher; when the interval between two adjacent flow channels is greater than half of the thickness, the dispersal transmission resistance of electrolyte in horizontal direction is higher.

### Advantages of the invention

The invention has the following positive advantages: electrode for flow battery in this invention is advantageously featured by simple structure, easy processing and assembly, low thickness and internal resistance, effective transmission and dispersal of electrolyte, high power density of flow battery, high energy efficiency, long service life, etc., and can be made into high-power or even super-high-power flow batteries

### Description of figures

Figure 1 is the structural diagram for an embodiment of the invention.

Figure 2 is the enlarged view of part A in Figure 1.

Figure 3 is the front view of Figure 3.

### Implementation of the invention

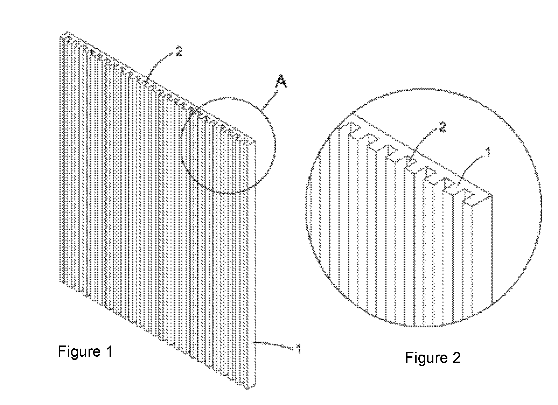

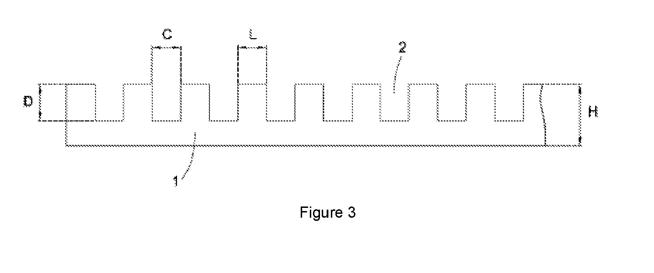

Refer to Figure 1, Figure 2 and Figure 3. The invention relates to an all vanadium redox flow battery electrode comprising graphite felt (1) which is a polyacrylonitrile graphite felt. Graphite felt (1) is in square and has a thickness H. The surface of graphite felt (1) includes multiple longitudinal flow channels (2) which are straight for transmitting an electrolyte. Each flow channel (2) has a width C and a depth D, and is distributed at equally spaced interval L.,

The following are three embodiments, in all of which graphite felt (1) is applied as electrode and assembled into all vanadium redox flow battery electrode together with perfluorinated ion exchange membrane, and 2mol/L vanadium ion electrolyte is used for charging and discharging test. The test results are shown below in detail:

| | Embodiment I | Embodiment II | Embodiment III |
|---|---|---|---|
| Thickness of graphite felt H | 2mm | 6mm | 10mm |
| Width of flow channel C | 1 mm | 3mm | 5mm |
| Depth of flow channel D | 1 mm | 3mm | 5mm |
| Interval between flow channels L | 1 mm | 3mm | 5mm |
| Current density | 80mA/cm² | 80mA/cm² | 80mA/cm² |
| Average discharge voltage | 1.23V | 1.25V | 1.22V |
| Power density | 98mW/cm² | 100mW/cm² | 97mW/cm² |
| Energy efficiency | 83% | 85% | 82% |

In said three embodiments, the thickness of graphite felt H is respectively 2mm, 6mm and 10mm. In each embodiment (1), the width C, depth D and interval L of flow channel (2) are each half of the thickness of corresponding graphite felt (1), the results shows that the transmission and dispersal effect of electrolyte along longitudinal direction, horizontal direction and depth of flow channel (2) is quite satisfactory, the polarization of electrode is small and the average discharge voltage, power density and energy efficiency are quite high.

When the thickness H of graphite felt (1) is less than 2mm, not only the active center for electrode reaction is less and electrochemical polarization of electrode is small, but also the cross-sectional area of flow channel (2) is small, the flow transmission resistance of electrolyte in longitudinal direction of flow channel (2) is high and the dispersal polarization of electrode is large, therefore resulting in low power density of flow battery and energy efficiency; when the thickness H of graphite felt (1) is over 10mm, the electrode resistance and ohmic polarization is large, resulting in low power density of flow battery and energy efficiency. The said test shows that: when the preferred thickness of graphite thickness H is 6mm, the electrolyte undergoes the best transmission and dispersal in graphite felt (1), the polarization of electrode is maintained at the lowest level and the flow battery enjoys the highest the average discharge voltage, power density and energy efficiency.

The electrode for flow battery of this invention is advantageously featured by simple structure, easy processing and assembly, low thickness and internal resistance, effective transmission and dispersal of electrolyte, high power density of flow battery, high energy efficiency, long service life, etc., and can be made into high-power or even super-high-power flow battery.

## Claims

1. An electrode for flow battery, **characterized in that** the electrode comprises graphite felt, said graphite felt includes multiple flow channels for transmitting electrolyte.

2. The electrode for flow battery of Claim 1, **characterized in that** said graphite felt is a polyacrylonitrile graphite felt.

3. The electrode for flow battery of Claim 1, **characterized in that** said flow channels are straight.

4. The electrode for flow battery of Claim 1, **characterized in that** said flow channels are distributed at equally spaced interval.

5. The electrode for flow battery of Claim 1, **characterized in that** said graphite has a thickness of 2 -10mm, said flow channel has a width of 1-5mm and a depth of 1-5mm, and the interval between flow channels is 1-5mm.

6. The electrode for flow battery of Claim 5, **characterized in that** the width and depth of said flow channel and the interval between said channels are each half of the thickness of graphite felt.
